# EUROPEAN PATENT SPECIFICATION

(11) **EP 2 317 425 B1**
(45) Date of publication and mention of the grant of the patent: **04.07.2018**
(21) Application number: 09174539.8
(22) Date of filing: 29.10.2009
(51) Int. Cl.: G06F 1/16, G06F 3/0488

(54) **Systems and methods for providing direct and indirect navigation modes for touchscreen devices**
Systeme und Verfahren zur Bereitstellung direkter und indirekter Navigationsmodi für Berührungsbildschirmvorrichtungen
Systèmes et procédés pour fournir des modes de navigation directe et indirecte pour des dispositifs à écran tactile

(43) Date of publication of application: 04.05.2011
(73) Proprietor: BlackBerry Limited, Waterloo, ON N2K 0A7 (CA)
(72) Inventor: Griffin, Jason Tyler, Waterloo Ontario N2L 3W8 (CA); Reeve, Scott David, Waterloo Ontario N2L 3W8 (CA)
(74) Representative: MERH-IP Matias Erny Reichl Hoffmann Patentanwälte PartG mbB

(56) References cited:
- EP-A- 1 562 105
- WO-A-2009/035212
- US-A1- 2008 165 152
- US-B1- 6 278 443

## Description

### TECHNICAL FIELD

Embodiments described herein relate generally to mobile devices with touch screen displays.

### BACKGROUND

Mobile devices are typically provided with electronic displays in order to visually display information content to their users. Recently, these displays have become larger (relative to the size of the mobile devices), allowing more information to be displayed on the display at one time, and to better display multimedia content.

It has also become prevalent for mobile devices to be provided with touch screen displays that can both display content and receive input from a user. In some instances, the touch screen display is intended to be the predominant method of providing user input to the mobile device, and accordingly few (if any) physical buttons, keyboards or other input devices may be provided on the mobile device.

WO2009/035212 relates to a touch-screen mobile device wherein a user can hold the mobile device with one hand and operate the device with the thumb of the same hand. It comprises: a touch screen; an arc-shaped user interface, displayed on the touch screen, which takes one corner of the touch screen as its center; and a control part that detects user touch actions such as tap, multiple-taps, swipe, drag, or hold & drag, and processes the user feedback accordingly.

EP 1562105 A relates to a method and a system for automatically displaying content of a window on a display that has changed orientation. The content of a window, such as a dialog box, that has been authored for a particular size is repositioned and resized such that the window is viewable in entirety when the display screen orientation is changed (e.g., from portrait to landscape.) To adopt the window size and appearance while a change of orientation, a scroll bar is added to or remove from the window.

US 2008/165152 relates to a method performed at a portable device with a touch screen display that includes a portrait view and a landscape view. The method includes detecting the device in a first orientation, and while the device is in the first orientation, displaying an application in a first mode in a first view. The method also includes detecting the device in a second orientation and displaying the application in a second mode in a second view.

It is desired to address or ameliorate one or more shortcomings or disadvantages associated with existing ways of interacting with touch screen equipped mobile devices, or to at least provide one or more useful alternatives to such ways.

### BRIEF DESCRIPTION OF THE DRAWINGS

For a better understanding of the described example embodiments and to show more clearly how they may be carried into effect, reference will now be made, by way of example, to the accompanying drawings in which:
FIG. 1 is a block diagram of a mobile device in one example implementation;
FIG. 2 is a block diagram of a communication sub-system component of the mobile device of FIG. 1;
FIG. 3 is a block diagram of a node of a wireless network;
FIG. 4 is a schematic diagram showing in further detail various components of the mobile device of FIG. 1;
FIG. 5 is a schematic diagram of an exemplary mobile device in a first configuration;
FIG. 6a is a schematic diagram of an exemplary mobile device in a second configuration;
FIG. 6b is a schematic diagram of another exemplary mobile device in a second configuration;
FIG. 6c is a schematic diagram of yet another exemplary mobile device in a second configuration;
FIG. 7 is a flowchart of a method for providing at least one of a plurality of navigation modes on a mobile device; and
FIGS. 8a-d are schematic diagrams illustrating further exemplary mobile devices.

### DETAILED DESCRIPTION

Embodiments described herein are generally directed to systems and methods for providing direct and indirect navigation modes on a mobile device based on a detected characteristic of the mobile device.

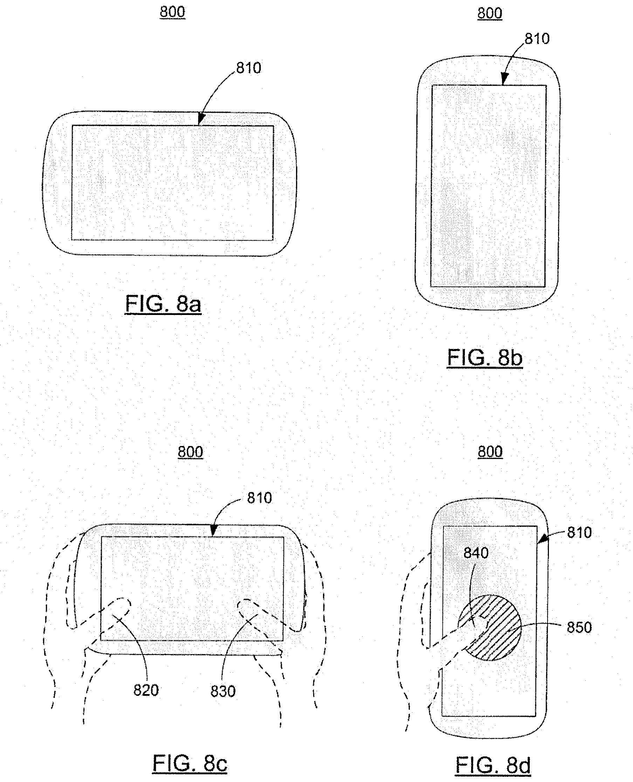

Many mobile devices are currently provided with large (relative to the overall size of the device) electronic displays for visually displaying information. In a number of current designs, a display with a substantially rectangular aspect ratio is provided. Many of these devices are capable of rotating, adjusting, or otherwise arranging the content displayed on the device to better suit a particular orientation of the display. Referring briefly to FIGS. 8a and 8b, for example, where a mobile device, shown generally as 800, is provided with a display 810 that is substantially rectangular, the mobile device may display content on the display 810 differently when the display 810 is in a landscape orientation (i.e. the longer edge of the display 810 is oriented substantially horizontally and the shorter edge of the display is oriented substantially vertically, as shown in FIG. 8a) and when the display 810 is in a portrait orientation (i.e. the shorter edge of the display 810 is oriented substantially horizontally and the longer edge of the display 810 is oriented substantially vertically, as shown in FIG. 8b). This may include relocating virtual soft keys, altering the aspect ratio of images, re-flowing displayed text, or otherwise adjusting the content displayed on the display.

It is also becoming increasingly prevalent for mobile devices to be provided with touch screen displays. When a user touches the touch screen display, the mobile device can determine the location of the touch on the touch screen. The way in which the location is determined and the precision of the location may depend on the type of touch screen. A non-exhaustive list of touch screens includes, for example, resistive touch screens, capacitive touch screens, projected capacitive touch screens, infrared touch screens, surface acoustic wave (SAW) touch screens, and pressable touch screens (such as, for example, Research in Motion's SurePress™ touch screens). Depending on their type, touch screen displays may be responsive to being touched by various objects, including for example a stylus or a finger or a thumb.

Mobile devices with touch screen displays typically provide direct navigation. That is, the mobile device interprets touch input from a user as directly corresponding to information (or content) items displayed on the touch screen coincident with the location of the touch input. For example, if a user wishes to select particular content displayed on the display (e.g. an object, icon, button, item in a displayed list, etc.), the user simply touches the desired content.

By interpreting touch input in this way, such a mobile device allows users to directly select any content currently shown on its display, without the requirement of scrolling over or toggling between any other content items that may be displayed on the display. However, interpreting touch input as direct navigation input imposes a noteworthy constraint - in order to select content, a user must be able to touch the touch screen display at the location coincident with the location of the displayed content.

This constraint may not be a significant concern where a user interacts with the mobile device using two hands. For example FIG. 8c depicts an exemplary mobile device 800 being cradled held with two hands, with the display 810 in a landscape orientation. In this example, the user is able to touch virtually any area on the touch screen display 810 using one of his or her two thumbs 820 and 830 without significantly adjusting his or her grasp on the mobile device 800. Alternatively, the user could hold the mobile device with one hand and use the index finger of their other hand to touch (virtually any area) of the touch screen display.

However, in certain situations a user may desire to both support and interact with a mobile device using only one hand. In such a situation, interpreting touch input as direct navigation input may make it difficult or inconvenient to interact with the mobile device, as a user may have difficulty simultaneously supporting the device and touching the entire area of the touch screen display. For example, FIG. 8d depicts an exemplary mobile device being held with only one hand, with the display in a portrait orientation. In this situation, a user may only be able to comfortably register touch Input using his or her thumb 840, and may only be able to comfortably register touch input in the area of the display indicated by shaded area 850.

Applicants have determined that one approach to address these difficulties is to configure an area of the touch screen that the user is able to touch while comfortably holding the device using one hand (for example area 850) to operate in an indirect navigation mode, similar to the function of a track pad, for example. That is, touch input registered on one area of the touch screen display is interpreted by the mobile device as relative navigation input used to control the location of a cursor (or pointer or other indicator) displayed on a different area of the touch screen display. As noted, this indirect navigation interpretation is generally analogous to interpreting input from a laptop track pad (or mouse or scroll wheel or other indirect input device) to control the movement of a cursor (or pointer or other indicator) within content displayed on the display.

For the purposes of the present disclosure, the term indirect navigation is intended to be interpreted broadly, and would encompass forms of relative navigation (e.g. using an input device or directional keys (either physical keys or virtual keys displayed on a touch screen display) to control the location of a pointer or cursor or other indicator within the displayed content) as well as forms of absolute navigation where there is a direct, but non-coincident correspondence between the input area and the display area (e.g. a digitizing tablet).

By implementing indirect navigation on a touch screen display, a user would be able to select or otherwise interact with content displayed anywhere on the display without having to touch the touch screen display at the location coincident with the location of the displayed content. This may be particularly beneficial when a user only has one hand available to both hold and interact with a mobile device.

Applicants have also determined that in certain situations it may be desirable for touch input to be interpreted as direct navigation input, and in other situations it may be desirable for touch input to be interpreted as indirect navigation input. For example, when the mobile device is being operated with two hands, direct navigation may be desirable, while indirect navigation may be preferred when the device is being operated with only one hand. One way to anticipate how a mobile device is likely being held and interacted with is to relate the spatial orientation of the mobile device (e.g. whether the display is in a portrait or a landscape orientation) to the desired navigation mode. Alternately, the desired navigation mode may correspond to a physical configuration of the mobile device (e.g. whether an integrated keypad is extended or retracted, whether or not an auxiliary display is deployed, etc.). A particular orientation or configuration of a mobile device may be automatically detected using a detector.

In a broad aspect, there is provided a mobile device comprising a touch screen display and a detector configured to detect a characteristic of the mobile device, wherein the mobile device is operable to, in response to the detector detecting a first characteristic, provide a first direct navigation mode, and in response to the detector detecting a second characteristic, provide a second indirect navigation mode. In some implementations the first and second characteristics may correspond to first and second spatial orientations of the mobile device, and in other implementations the first and second characteristics may correspond to first and second physical configurations of the mobile device. As well, when the second indirect navigation mode is provided, the mobile device may be configured to interpret input from the touch screen display as indirect navigation input.

In some implementations, the detector is an orientation sensor. Such an orientation sensor may be operable to determine if the touch screen display of the mobile device is in or substantially in a portrait orientation or a landscape orientation.

In some implementations, the mobile device is further operable to configure a first area of the touch screen display to receive navigation input, and configure a second area of the touch screen display to display content Further, the navigation input received from the second area of the touch screen display may be interpreted by the mobile device as indirect navigation input.

Another broad aspect is directed to methods for providing one of a plurality of user interface navigation modes on a mobile device, the mobile device comprising a touch screen display and a detector operable to detect a characteristic of the mobile device, the method comprising detecting a first characteristic of the mobile device and providing a first direct navigation mode, and upon determining a change in the characteristic of the mobile device, switching to a second indirect navigation mode. As well, when switching to the second indirect navigation mode, the method may further include configuring a first area of the touch screen display to receive navigation input, and configuring a second area of the touch screen display to display content. The second indirect navigation mode may be configured to interpret input from the touch screen display as indirect navigation input. In some implementations, the mobile device is further configured to disregard touch input received from the first area of the display. In further embodiments, the detector may be an orientation sensor, where the first direct navigation mode is provided when the touch screen display is in or substantially in a landscape orientation.

In some implementations, the mobile device may be a mobile communication device.

A computer-readable medium may also be provided comprising instructions executable on a processor of a mobile device for implementing the method(s).

These and other aspects and features of various embodiments will be described in greater detail below.

Some example embodiments described herein make use of a mobile station. A mobile station is a two-way communication device with advanced data communication capabilities having the capability to communicate with other computer systems, and is also referred to herein generally as a mobile device. A mobile device may also include the capability for voice communications. Depending on the functionality provided by a mobile device, it may be referred to as a data messaging device, a two-way pager, a cellular telephone with data messaging capabilities, a wireless Internet appliance, or a data communication device (with or without telephony capabilities). A mobile device communicates with other devices through a network of transceiver stations.

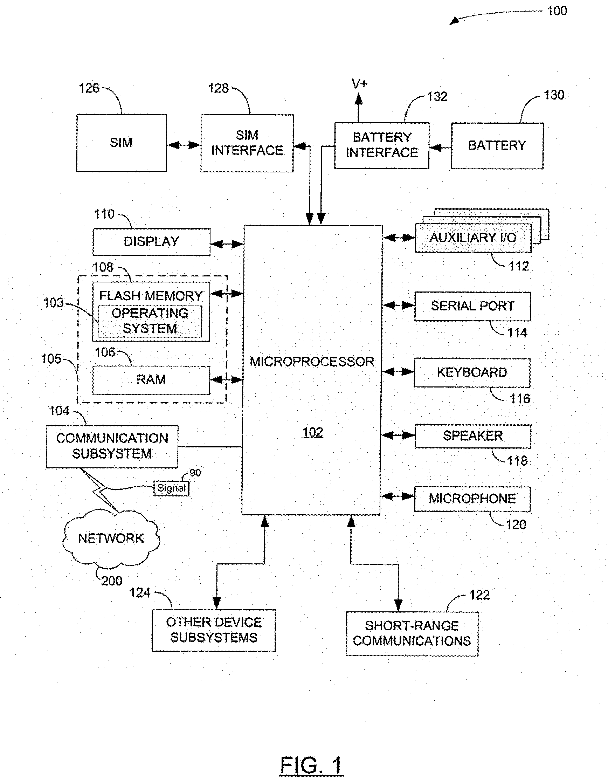

To aid the reader in understanding the structure of a mobile device and how it communicates with other devices, reference is made to FIGS. 1 through 3.

Referring first to FIG. 1, a block diagram of a mobile device in one example implementation is shown generally as 100. Mobile device 100 comprises a number of components, the controlling component being microprocessor or CPU 102. Microprocessor 102 is typically programmed with an operating system 103 and controls the overall operation of mobile device 100. In some embodiments, certain communication functions, including data and voice communications, are performed through a communications module also referred to herein as a communication subsystem 104. Communication subsystem 104 receives communications signals 90 (also referred to herein as "messages") from and sends messages to a wireless network 200. By way of example only, such communication signals 90 may correspond to phone calls, email or other data messages.

In this example implementation of mobile device 100, communication subsystem 104 is configured for cellular communication in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS).

New standards are still being defined, but it is believed that they will have similarities to the network behavior described herein, and it will also be understood by persons skilled in the art that the described embodiments are intended to use any other suitable standards that are developed in the future. The wireless link connecting communication subsystem 104 with network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network associated with mobile device 100 is a GSM/GPRS wireless network in one example implementation of mobile device 100, other wireless networks may also be associated with mobile device 100 in variant implementations. Alternatively, the network and device 100 might employ WiFi/WiMax radios utilizing SIP (session initialization protocols) and VoIP (voice over internet protocols). Different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and third-generation (3G) networks like EDGE and UMTS. Some older examples of data-centric networks include the MobitexTM Radio Network and the DataTACTM Radio Network. Examples of older voice-centric data networks include Personal Communication Systems (PCS) networks like GSM and Time Division Multiple Access (TDMA) systems.

Microprocessor 102 also interacts with additional subsystems such as memory 105 which may include a Random Access Memory (RAM) 106 and flash memory 108, touch screen display 110, auxiliary input/output (I/O) subsystem 112, serial port 114, keyboard 116, speaker 118, microphone 120, short-range communications 122 and other devices 124.

Some of the subsystems of mobile device 100 perform communication-related functions, whereas other subsystems may provide "resident" or on-device functions. By way of example, touch screen display 110 and keyboard 116 may be used for both communication-related functions, such as entering a text message for transmission over network 200, and device-resident functions such as a calculator, media player or task list. Operating system software 103 code used by microprocessor 102 is typically stored in a persistent store such as flash memory 108, which may alternatively be a read-only memory (ROM) or similar storage element (not shown). Those skilled in the art will appreciate that the operating system software 103 code, specific device applications, or parts thereof, may be temporarily loaded into a volatile store such as RAM 106.

In some embodiments, mobile device 100 may send and receive communication signals 90 over network 200 after required network registration or activation procedures have been completed. Network access is associated with a subscriber or user of a mobile device 100. To identify a subscriber, mobile device 100 requires a Subscriber Identity Module or "SIM" card 126 to be inserted in a SIM interface 128 in order to communicate with a network. SIM 126 is one type of a conventional "smart card" used to identify a subscriber of mobile device 100 and to personalize the mobile device 100, among other things. Without SIM 126, mobile device 100 is not fully operational for communication with network 200.

By inserting SIM 126 into SIM interface 128, a subscriber can access all subscribed services. Services could include: web browsing media transfers, such as music and/or image downloading or streaming, and messaging, such as e-mail, voice mail, Short Message Service (SMS), and Multimedia Messaging Services (MMS). More advanced services may include: point of sale, field service and sales force automation. SIM 126 includes a processor and memory for storing information. Once SIM 126 is inserted in SIM interface 128, it is coupled to microprocessor 102. In order to identify the subscriber, SIM 126 contains some user parameters such as an International Mobile Subscriber Identity (IMSI). An advantage of using SIM 126 is that a subscriber is not necessarily bound by any single physical mobile device. SIM 126 may store additional subscriber information for a mobile device as well, including datebook (or calendar) information and recent call information. In certain embodiments, SIM 126 may comprise a different type of user identifier and may be integral to mobile device 100 or not present at all.

Mobile device 100 is a battery-powered device and includes a battery interface 132 for receiving one or more rechargeable batteries 130. Battery interface 132 is coupled to a regulator (not shown), which assists battery 130 in providing power V+ to mobile device 100. Although current technology makes use of a battery, future technologies such as micro fuel cells may provide the power to mobile device 100.

Microprocessor 102, in addition to its operating system functions, enables execution of software applications on mobile device 100. A set of applications that control basic device operations, including data and voice communication applications, will normally be installed on mobile device 100 during its manufacture.

Additional applications may also be loaded onto mobile device 100 through network 200, auxiliary I/O subsystem 112, serial port 114, short-range communications subsystem 122, or any other suitable subsystem 124. This flexibility in application installation increases the functionality of mobile device 100 and may provide enhanced on-device functions, communication-related functions, or both. For example, secure communication applications may enable electronic commerce functions and other such financial transactions to be performed using mobile device 100.

Serial port 114 enables a subscriber to set preferences through an external device or software application and extends the capabilities of mobile device 100 by providing for information or software downloads to mobile device 100 other than through a wireless communication network. The alternate download path may, for example, be used to load an encryption key onto mobile device 100 through a direct and thus reliable and trusted connection to provide secure device communication.

Short-range communications subsystem 122 provides for communication between mobile device 100 and different systems or devices, without the use of network 200. For example, subsystem 122 may include an infrared device and associated circuits and components for short-range communication. Examples of short range communication would include standards developed by the Infrared Data Association (IrDA), Bluetooth™, and the 802.11 family of standards developed by IEEE.

In use, a received signal such as a voice call, text message, an e-mail message, or web page download will be processed by communication subsystem 104 and input to microprocessor 102. Microprocessor 102 will then process the received signal for output to touch screen display 110 or alternatively to auxiliary I/O subsystem 112. A subscriber may also compose data items, such as e-mail messages, for example, using keyboard 116 in conjunction with touch screen display 110 and possibly auxiliary I/O subsystem 112.

Auxiliary I/O subsystem 112 may include devices such as: a mouse, track ball, infrared fingerprint detector, one or more roller wheels with dynamic button pressing capability, and a touch screen. Keyboard 116 comprises an alphanumeric keyboard and/or telephone-type keypad. A composed item may be transmitted over network 200 through communication subsystem 104. User input components comprised in auxiliary I/O subsystem 112 may be used by the user to navigate and interact with a user interface of mobile device 100.

For voice communications, the overall operation of mobile device 100 is substantially similar, except that the received signals would be output to speaker 118, and signals for transmission would be generated by microphone 120. Alternative voice or audio I/O subsystems, such as a voice message recording subsystem, may also be implemented on mobile device 100. Although voice or audio signal output is accomplished primarily through speaker 118, display 110 may also be used to provide additional information such as the identity of a calling party, duration of a voice call, or other voice call related information.

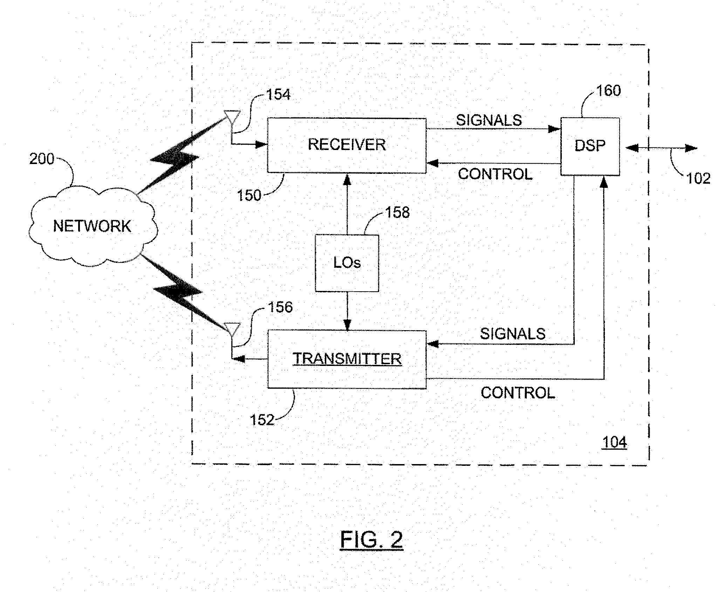

Referring now to FIG. 2, a block diagram of the communication subsystem component 104 of FIG. 1 is shown. Communication subsystem 104 comprises a receiver 150, a transmitter 152, one or more embedded or internal antenna elements 154, 156, Local Oscillators (LOs) 158, and a processing module such as a Digital Signal Processor (DSP) 160.

The particular design of communication subsystem 104 is dependent upon the network 200 in which mobile device 100 is intended to operate, thus it should be understood that the design illustrated in FIG. 2 serves only as one example. Signals 90 (FIG. 1) received by antenna 154 through network 200 are input to receiver 150, which may perform such common receiver functions as signal amplification, frequency down conversion, filtering, channel selection, and analog-to-digital (A/D) conversion. A/D conversion of a received signal 90 allows more complex communication functions such as demodulation and decoding to be performed in DSP 160. In a similar manner, signals to be transmitted are processed, including modulation and encoding, by DSP 160. These DSP-processed signals are input to transmitter 152 for digital-to-analog (D/A) conversion, frequency up conversion, filtering, amplification and transmission over network 200 via antenna 156. DSP 160 not only processes communication signals, but also provides for receiver and transmitter control. For example, the gains applied to communication signals in receiver 150 and transmitter 152 may be adaptively controlled through automatic gain control algorithms implemented in DSP 160.

The wireless link between mobile device 100 and a network 200 may contain one or more different channels, typically different RF channels, and associated protocols used between mobile device 100 and network 200. A RF channel is a limited resource that must be conserved, typically due to limits in overall bandwidth and limited battery power of mobile device 100.

When mobile device 100 is fully operational, transmitter 152 is typically keyed or turned on only when it is sending to network 200 and is otherwise turned off to conserve resources. Similarly, receiver 150 is periodically turned off to conserve power until it is needed to receive signals or information (if at all) during designated time periods.

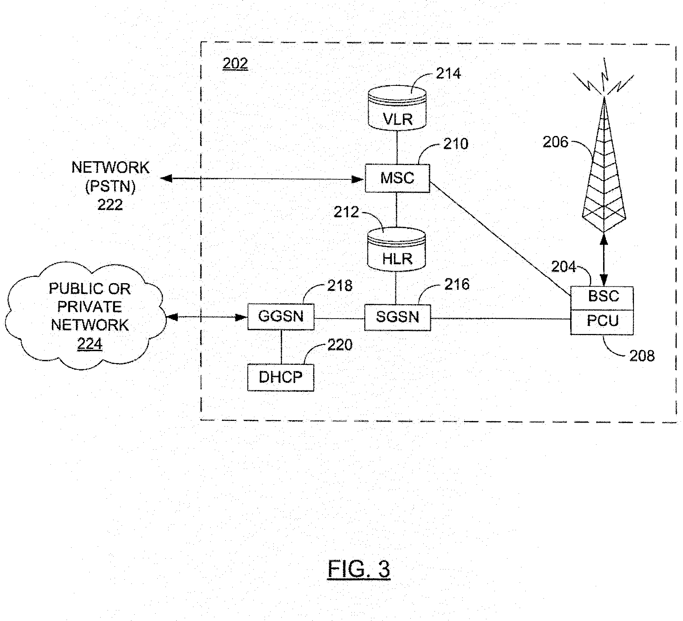

Referring now to FIG. 3, a block diagram of a node of a wireless network is shown as 202. In practice, network 200 comprises one or more nodes 202. Mobile device 100 communicates with a node 202 within wireless network 200. In the example implementation of FIG. 3, node 202 is configured in accordance with General Packet Radio Service (GPRS) and Global Systems for Mobile (GSM) technologies. Node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through network 200.

In a GSM network, MSC 210 is coupled to BSC 204 and to a landline network, such as a Public Switched Telephone Network (PSTN) 222 to satisfy circuit switched requirements. The connection through PCU 208, SGSN 216 and GGSN 218 to the public or private network (Internet) 224 (also referred to herein generally as a shared network infrastructure) represents the data path for GPRS capable mobile devices. In a GSM network extended with GPRS capabilities, BSC 204 also contains a Packet Control Unit (PCU) 208 that connects to SGSN 216 to control segmentation, radio channel allocation and to satisfy packet switched requirements. To track mobile device location and availability for both circuit switched and packet switched management, HLR 212 is shared between MSC 210 and SGSN 216. Access to VLR 214 is controlled by MSC 210.

Station 206 is a fixed transceiver station. Station 206 and BSC 204 together form the fixed transceiver equipment. The fixed transceiver equipment provides wireless network coverage for a particular coverage area commonly referred to as a "cell". The fixed transceiver equipment transmits communication signals to and receives communication signals from mobile devices within its cell via station 206. The fixed transceiver equipment normally performs such functions as modulation and possibly encoding and/or encryption of signals to be transmitted to the mobile device in accordance with particular, usually predetermined, communication protocols and parameters, under control of its controller. The fixed transceiver equipment similarly demodulates and possibly decodes and decrypts, if necessary, any communication signals received from mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile is stored in HLR 212. HLR 212 also contains location information for each registered mobile device and can be queried to determine the current location of a mobile device. MSC 210 is responsible for a group of location areas and stores the data of the mobile devices currently in its area of responsibility in VLR 214. Further, VLR 214 also contains information on mobile devices that are visiting other networks. The information in VLR 214 includes part of the permanent mobile device data transmitted from HLR 212 to VLR 214 for faster access. By moving additional information from a remote HLR 212 node to VLR 214, the amount of traffic between these nodes can be reduced so that voice and data services can be provided with faster response times and at the same time requiring less use of computing resources.

SGSN 216 and GGSN 218 are elements added for GPRS support; namely packet switched data support, within GSM. SGSN 216 and MSC 210 have similar responsibilities within wireless network 200 by keeping track of the location of each mobile device 100. SGSN 216 also performs security functions and access control for data traffic on network 200. GGSN 218 provides internetworking connections with external packet switched networks and connects to one or more SGSNs 216 via an Internet Protocol (IP) backbone network operated within the network 200. During normal operations, a given mobile device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring a DHCP server 220 connected to the GGSN 218.

There are many mechanisms for dynamic IP assignment, including using a combination of a Remote Authentication Dial-In User Service (RADIUS) server and DHCP server. Once the GPRS Attach is complete, a logical connection is established from a mobile device 100, through PCU 208, and SGSN 216 to an Access Point Node (APN) within GGSN 218. The APN represents a logical end of an IP tunnel that can either access direct Internet compatible services or private network connections. The APN also represents a security mechanism for network 200, insofar as each mobile device 100 must be assigned to one or more APNs and mobile devices 100 cannot exchange data without first performing a GPRS Attach to an APN that it has been authorized to use. The APN may be considered to be similar to an Internet domain name such as "myconnection.wireless.com" .

Once the GPRS Attach is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, network 200 will run an idle timer for each PDP Context to determine if there is a lack of activity. When a mobile device 100 is not using its PDP Context, the PDP Context can be deallocated and the IP address returned to the IP address pool managed by DHCP server 220.

Embodiments of mobile device 100 may be equipped and configured for communication over a cellular connection via communication subsystem 104 and with a wireless local area network (WLAN) using a communication form commonly termed "Wi-Fi". Such Wi-Fi connections may employ a suitable WLAN-compatible communication technology, of which unlicensed mobile access (UMA) technology is one example. UMA technology provides access to GSM and GPRS mobile services over unlicensed spectrum technologies, including Bluetooth™ and 802.11 wireless connections. UMA enables cellular network subscribers to roam and hand over between cellular networks and public and private wireless networks using dual-mode mobile handsets. Mobile device 100 may also be configured for communication with local wireless devices, such as Bluetooth™ enabled devices and may be configured for communication in a global positioning system (GPS) context.

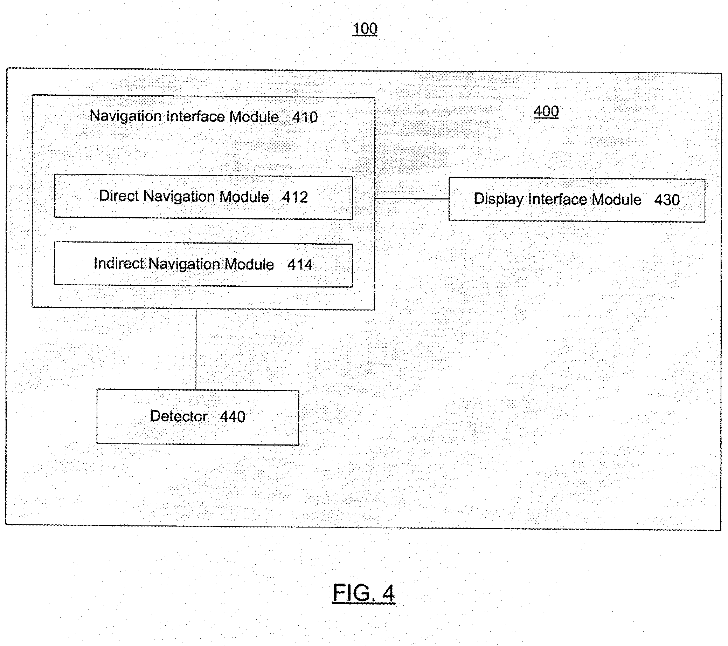

The configuration and operation of an example mobile device, such as mobile device 100, in the present context is described in further detail in relation to FIGS. 4 to 8.

Referring now to FIG. 4, some navigation components of mobile device 100, collectively shown generally as 400, are shown and described in further detail. Such navigation components 400 may be operatively coupled to the CPU 102.

Mobile device 100 includes detector 440 that is operable to detect at least a first characteristic and a second characteristic of mobile device 100, as will be discussed in further detail below. In some example embodiments, a characteristic of mobile device 1 00 may include a particular physical configuration of the mobile device (e.g. whether an integrated keypad is extended or retracted, whether or not an auxiliary display is deployed, etc.) or a particular spatial orientation of mobile device 100 in the physical world.

In some embodiments, detector 440 comprises an orientation sensor for determining the relative spatial orientation of mobile device 100. Such an orientation sensor may comprise any of the known sensors in the art, for example an accelerometer, a tilt sensor, an inclinometer, a gravity based sensor, and a Micro-Electro-Mechanical (MEM) system that can include one of the above types of sensors on a micro-scale. Detector 440 may detect that mobile device 100 is in a first characteristic when the touch screen display 110 is substantially in a landscape orientation. Detector 440 may further detect that mobile device 100 is in a second characteristic when the touch screen display 110 is substantially in a portrait orientation. It will be understood that touch screen display 110 may be provided in alternate geometries (for example, a substantially square display or a round display) without impacting the functionality described herein.

Alternately, detector 440 may detect changes in the physical configuration of components of mobile device 100 (e.g. an integrated keypad being deployed, an auxiliary display being extended or retracted, a switch being toggled, a button being depressed, etc.). For example, detector 440 may detect that mobile device 100 is in a first characteristic when an integrated keyboard is retracted, and may further detect that mobile device 100 is in a second characteristic when the integrated keyboard is extended.

Mobile device 100 also includes touch screen display 110 that is operative to display visual representations of data content as directed by display module 430.

Display module 430 includes computer program instructions stored within memory 105 for execution by processor 102. It will be understood that the functionality of display module 430 may be provided or otherwise integrated with operating system 103 or with a different module on mobile device 100.

Touch screen display 110 is further operative to receive touch input. When a touch is registered on the touch screen display 110, auxiliary I/O subsystem 112 may determine the location of the touch on the touch screen. The way in which the location is determined and the precision of the location may depend on the type of touch screen. Depending on its type, touch screen display 110 may be responsive to being touched by various objects, including for example a stylus or a finger or a thumb. It will be understood that that the location of a touch may be determined by touch screen display 110, operating system 103 or by a different module on mobile device 100.

Touch screen input is passed from touch screen display 110 (either directly or via auxiliary I/O subsystem 112) to navigation interface module 410. Navigation interface module 410 includes computer program instructions stored within memory 105 for execution by processor 102. It will be understood that the functionality of navigation interface module 410 may be provided or otherwise integrated with operating system 103 or with a different module on mobile device 100.

Navigation interface module 410 comprises a direct navigation module 412 and an indirect navigation module 414. Based on input received from detector 440, navigation interface module 410 interprets touch input from touch screen display 110 according to parameters stored within either direct navigation module 412 or indirect navigation module 414.

In certain embodiments, when detector 440 detects that mobile device 100 is in a first characteristic, navigation interface module 410 interprets touch input using direct navigation module 412. When direct navigation module 412 is employed, touch input is interpreted as directly corresponding to content displayed on the touch screen coincident with the location of the touch input. For example, selecting content displayed on the touch screen display (e.g. an object, icon, button, item in a displayed list, etc.) is performed by touching the display at the location of the displayed content.

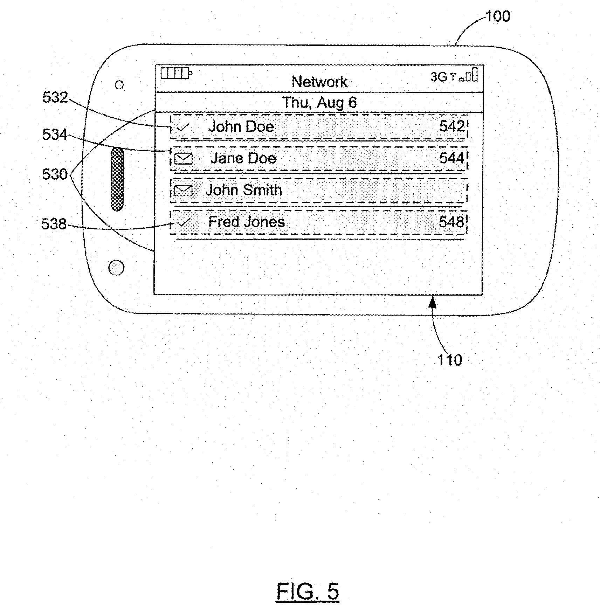

Referring to FIG 5, illustrated therein is an exemplary mobile device 100 in a first configuration displaying an exemplary list of e-mail messages 530 as may be displayed on the touch screen display 110. When navigation interface module 410 is interpreting touch input using direct navigation module 412, selecting the message 532 from "John Doe" is performed by touching the touch screen display 110 in the region coincident with the displayed message 532 (shown as 542). To select the message 538 from "Fred Jones", touch input must be registered in the region coincident with the displayed message 538 (shown as 548).

In some embodiments, detector 440 is operative to periodically detect if the characteristic of mobile device 100 has changed. As previously discussed, for the purposes of this application a characteristic of mobile device 100 may include a particular physical configuration or a particular orientation of the mobile device. When detector 440 detects that mobile device 100 is in a second characteristic, navigation interface module 410 interprets touch input using indirect navigation module 414.

When detector 440 detects that mobile device 100 is in a second characteristic, navigation interface module 410 interprets touch input using indirect navigation module 414. When indirect navigation module 414 is employed, touch input registered on one area of the touch screen display is interpreted by the mobile device as relative navigation input used to control the location of a cursor (or pointer or other indicator) displayed on a different area of the touch screen display.

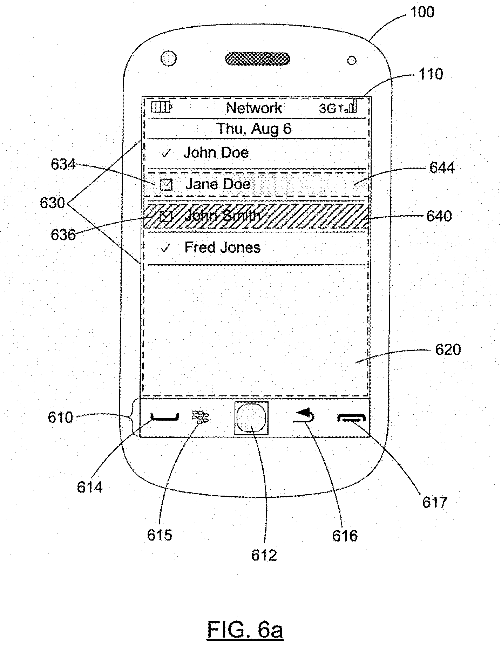

Referring to FIG. 6a, illustrated therein is an example mobile device 100 in a second configuration. In this example, a first area 610 of the display 110 comprises navigation area 612, and a second area 620 (shown by a dotted outline) of the display is displaying contents such as an exemplary list of e-mail messages 630. In this example, a visual demarcation of first area 610 and second area 620 is provided by a line displayed on touch screen display 110, however this visual demarcation is not strictly necessary in alternate embodiments.

In this illustration, the message 636 (from "John Smith") is visually indicated as being currently selected by shading 640, and navigation area 612 in first area 610 is displaying a graphic to visually indicate navigation area 612 as an area for indirect navigation input. Touch input registered in navigation area 612 is interpreted by indirect navigation module 414 to control the location of shading 640. For example, shading 640 could be relocated to area 644 based on touch input received in area 612 (such as a thumb sliding "upwardly" over navigation area 612), indicating that message 634 is now selected. While navigation area 612 is illustrated as operating in the fashion of a trackpad, other indirect navigation modes could be provided in navigation area 612, for example virtual (or "soft") arrow keys or direction buttons could be provided to control the location and movement of a cursor (or pointer or other indicator) displayed in second area 620 of the touch screen display. Further, in other embodiments, the navigation area 612 may comprise the entire first area 610.

It will be understood that depending on parameters of the touch input registered in navigation area 612 (including but not limited to the direction, length, speed, duration, and angle of the touch input), shading 640 may be relocated to other content displayed in second area 620. It will also be understood that touch input in navigation area 612, in addition to controlling a cursor (or pointer or other indicator) displayed in second area 620, may be used to relocate or otherwise interact with information or objects displayed in second area 620. For example, touch input in navigation area 612 could be used to scroll the information displayed in second area 620, or to re-order items in a displayed list.

In the example shown in FIG. 6a, icons 614, 615, 616, and 617 are displayed in first area 610 alongside navigation area 612. In certain embodiments, touch input registered on touch screen display 110 coincident with these icons may be interpreted as direct navigation input, allowing these icons to selected directly, without touching navigation area 612. Also, in certain implementations, navigation interface module 410 may be configured to ignore touch input registered in second area 620 when employing indirect navigation module 414.

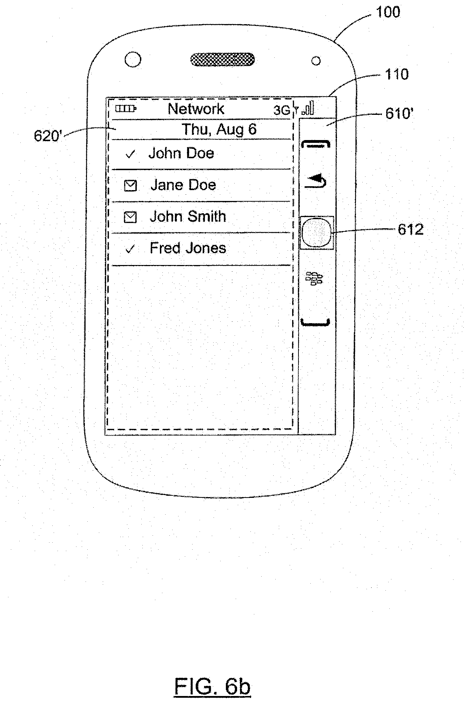

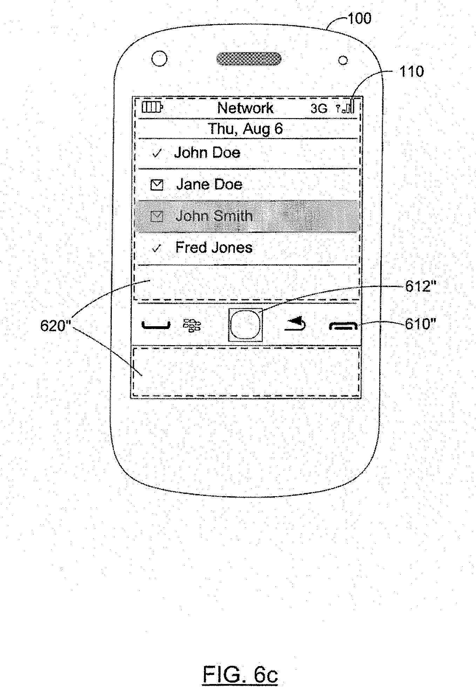

Further, first area 610 is illustrated as being located below second area 620. Alternatively, first area 610 could be displayed above second area 620. In the alternate embodiments illustrated in FIG. 6b, first area 610' could be located beside second area 620', or first area 610" could be located across touch screen display 110, dividing second area 620" into two discontinuous areas of the screen, as shown in FIG. 6c. Also, it will be understood that while first area 610 and particularly navigation area 612 have been illustrated as being relatively smaller than second area 620, their relative size and geometries can be varied in alternate implementations.

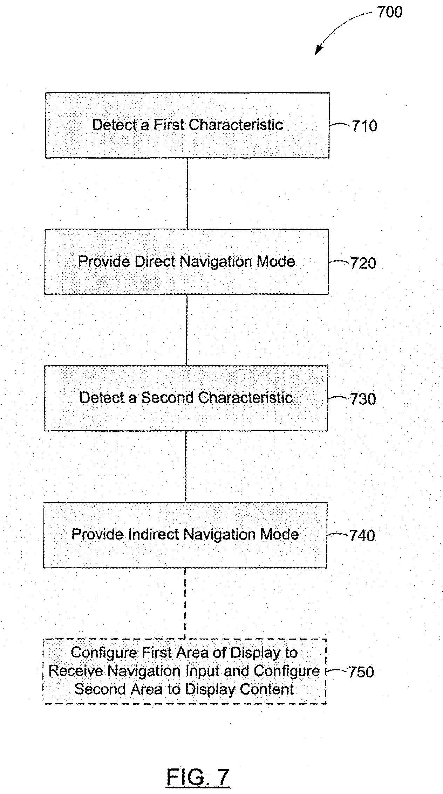

Referring now to FIG. 7, there is shown a method 700 of providing direct and indirect navigation modes on a mobile device based on a detected characteristic of the mobile device.

In operation, detector 440 detects a first characteristic of the mobile device 100 corresponding to a first orientation or configuration (Block 710). For example, detector 440 may detect that the touch screen display 110 of mobile device 100 is in a landscape orientation. In response to detection of a first characteristic, navigation interface module 410 employs direct navigation module 412 to provide a direct navigation mode for interpreting touch screen input (Block 720).

When detector 440 detects a second characteristic of the mobile device 100 (Block 730) is in a second orientation or configuration, it instructs navigation interface module 410 to employ indirect navigation module 414 for interpreting touch screen input in an indirect navigation mode (Block 730). In certain embodiments (as shown in Block 740), when detector 440 detects that mobile device 100 is in a second orientation or configuration, display interface module 430 may configure a first area 610 of touch screen display 110 to receive navigation input and configure a second area 620 of touch screen display 110 to display content (Block 750).

It will be understood that display interface module 430 may reconfigure the touch screen display 110 before navigation interface module 410 employs indirect navigation module 414. It will be further understood that while FIG. 7 illustrates methods for providing a first direct navigation mode and then providing a second indirect navigation mode, a mobile device may provide a first indirect navigation mode and then provide a second direct navigation mode. Further, in certain embodiments detector 440 may be operative to periodically detect one or more characteristics such as the configuration or orientation of mobile device 100 and signal navigation interface module 410 and display interface module 430 accordingly as previously described.

The steps of a method for providing direct and indirect navigation modes on a mobile device based on a detected characteristic of the mobile device in accordance with any of the embodiments described herein may be provided as executable software instructions stored on computer-readable media, which may include transmission-type media.

## Claims

1. A mobile device (100) comprising:
a touch screen display (110); and,
a detector (440) configured to detect the orientation of the mobile device,
wherein the mobile device is operable to:
in response to the detector detecting a first orientation, providing a first direct navigation mode, and
in response to the detector detecting a second orientation,
providing a second indirect navigation mode,
wherein the second indirect navigation mode enables the user to select or interact with content displayed on said touch screen display (110) without having to touch said touch screen display (110) at the location coincident with the location of said displayed content.

2. The mobile device of claim 1 wherein in the second indirect navigation mode, input from the touch screen display (110) is interpreted as indirect navigation input.

3. The mobile device of claim 1 or 2 wherein the detector (440) is an orientation sensor.

4. The mobile device of claim 3 wherein the second orientation of the mobile device corresponds to the touch screen display being substantially in a portrait orientation.

5. The mobile device of any preceding claim, wherein the mobile device is operable to:
(e) configure a first area of the touch screen display to receive indirect navigation input; and
(f) configure a second area of the touch screen display to display content.

6. A method for providing one of a plurality of user interface navigation modes on a mobile device (100), the mobile device comprising:
a touch screen display (110); and
a detector (440) operative to detect the orientation of the mobile device,
wherein the mobile device is configured to operate in a first direct navigation mode and in a second indirect navigation mode,
the method comprising:
upon detecting (710) a first orientation of the mobile device, providing (720) the first direct navigation mode; and
upon detecting (730) a second orientation of the mobile device, providing (740) the second indirect navigation mode,
wherein the second indirect navigation mode enables the user to select or interact with content displayed on said touch screen display (110) without having to touch said touch screen display (110) at the location coincident with the location of said displayed content.

7. The method of claim 6 wherein in the second indirect navigation mode, input from the touch screen display is interpreted as indirect navigation input.

8. The method of claim 6 or 7 wherein the detector (440) is an orientation sensor.

9. The method claim 8 wherein the first direct navigation mode is provided when the touch screen display is substantially in a landscape orientation.

10. The method of any of claims 6 to 9, wherein providing the second indirect navigation mode further comprises:
(e) configuring a first area of the touch screen display to receive indirect navigation input; and,
(f) configuring a second area of the touch screen display to display content.

11. A computer-readable medium comprising instructions executable on a processor (102) of the mobile device (100) for implementing the method of any of claims 6 to 10.

## Patentansprüche

1. Mobilgerät (100), umfassend:
eine Berührungsbildschirmanzeige (110) und
einen Detektor (440), der dazu konfiguriert ist, die Ausrichtung des Mobilgeräts zu erkennen,
wobei das Mobilgerät betreibbar ist zum:
als Reaktion darauf, dass der Detektor eine erste Ausrichtung erkennt, Bereitstellen eines ersten, direkten Navigationsmodus und
als Reaktion darauf, dass der Detektor eine zweite Ausrichtung erkennt, Bereitstellen eines zweiten, indirekten Navigationsmodus,
wobei der zweite, indirekte Navigationsmodus dem Benutzer ermöglicht, Inhalt, der auf der Berührungsbildschirmanzeige (110) angezeigt wird, auszuwählen oder damit zu interagieren, ohne die Berührungsbildschirmanzeige (110) an der Stelle berühren zu müssen, die mit der Stelle des angezeigten Inhalts zusammenfällt.

2. Mobilgerät nach Anspruch 1, wobei in dem zweiten, indirekten Navigationsmodus eine Eingabe von der Berührungsbildschirmanzeige (110) als eine indirekte Navigationseingabe gedeutet wird.

3. Mobilgerät nach Anspruch 1 oder 2, wobei der Detektor (440) ein Ausrichtungssensor ist.

4. Mobilgerät nach Anspruch 3, wobei die zweite Ausrichtung des Mobilgeräts der Berührungsbildschirmanzeige, die im Wesentlichen in einem Hochformat ist, entspricht.

5. Mobilgerät nach einem vorhergehenden Anspruch, wobei das Mobilgerät betreibbar ist zum:
(e) Konfigurieren eines ersten Bereichs der Berührungsbildschirmanzeige, um eine indirekte Navigationseingabe zu empfangen; und
(f) Konfigurieren eines zweiten Bereichs der Berührungsbildschirmanzeige, um Inhalt anzuzeigen.

6. Verfahren zur Bereitstellung eines von einer Mehrzahl von Benutzerschnittstellennavigationsmodi auf einem Mobilgerät (100), wobei das Mobilgerät umfasst:
eine Berührungsbildschirmanzeige (110) und
einen Detektor (440), der dazu betriebsfähig ist, die Ausrichtung des Mobilgeräts zu erkennen,
wobei das Mobilgerät dazu konfiguriert ist, in einem ersten, direkten Navigationsmodus und in einem zweiten, indirekten Navigationsmodus zu arbeiten,
wobei das Verfahren umfasst:
bei Erkennen (710) einer ersten Ausrichtung des Mobilgeräts Bereitstellen (720) des ersten, direkten Navigationsmodus und
bei Erkennen (730) einer zweiten Ausrichtung des Mobilgeräts Bereitstellen (740) des zweiten, indirekten Navigationsmodus,
wobei der zweite, indirekte Navigationsmodus dem Benutzer ermöglicht, Inhalt, der auf der Berührungsbildschirmanzeige (110) angezeigt wird, auszuwählen oder damit zu interagieren, ohne die Berührungsbildschirmanzeige (110) an der Stelle berühren zu müssen, die mit der Stelle des angezeigten Inhalts zusammenfällt.

7. Verfahren nach Anspruch 6, wobei in dem zweiten, indirekten Navigationsmodus eine Eingabe von der Berührungsbildschirmanzeige als eine indirekte Navigationseingabe gedeutet wird.

8. Verfahren nach Anspruch 6 oder 7, wobei der Detektor (440) ein Ausrichtungssensor ist.

9. Verfahren nach Anspruch 8, wobei der erste, direkte Navigationsmodus bereitgestellt wird, wenn die Berührungsbildschirmanzeige im Wesentlichen in einem Querformat ist.

10. Verfahren nach einem der Ansprüche 6 bis 9, wobei das Bereitstellen des zweiten, indirekten Navigationsmodus weiterhin umfasst:
(e) Konfigurieren eines ersten Bereichs der Berührungsbildschirmanzeige, um eine indirekte Navigationseingabe zu empfangen; und
(f) Konfigurieren eines zweiten Bereichs der Berührungsbildschirmanzeige, um Inhalt anzuzeigen.

11. Computerlesbares Medium, das Befehle umfasst, die auf einem Prozessor (102) des Mobilgeräts (100) zum Implementieren des Verfahrens nach einem der Ansprüche 6 bis 10 ausführbar sind.

## Revendications

1. Dispositif mobile (100) comprenant :
un écran d'affichage tactile (110) ; et
un détecteur (440) configuré pour détecter l'orientation du dispositif mobile,
le dispositif mobile étant utilisable pour :
en réponse à la détection d'une première orientation par le détecteur, fournir un premier mode de navigation directe, et
en réponse à la détection d'une seconde orientation par le détecteur, fournir un second mode de navigation indirecte,
dans lequel le second mode de navigation indirecte permet à l'utilisateur de sélectionner ou d'interagir avec du contenu affiché sur ledit écran d'affichage tactile (110) sans avoir à toucher ledit écran d'affichage tactile (110) à l'emplacement coïncidant avec l'emplacement dudit contenu affiché.

2. Dispositif mobile selon la revendication 1, dans lequel, dans le second mode de navigation indirecte, une entrée provenant de l'écran d'affichage tactile (110) est interprétée comme entrée de navigation indirecte.

3. Dispositif mobile selon la revendication 1 ou 2, dans lequel le détecteur (440) est un capteur d'orientation.

4. Dispositif mobile selon la revendication 3, dans lequel la seconde orientation du dispositif mobile correspond à l'écran d'affichage tactile sensiblement dans une orientation portrait.

5. Dispositif mobile selon n'importe quelle revendication précédente, le dispositif mobile étant utilisable pour :
(e) configurer une première zone de l'écran d'affichage tactile pour recevoir une entrée de navigation indirecte ; et
(f) configurer une seconde zone de l'écran d'affichage tactile pour afficher du contenu.

6. Procédé pour fournir un mode parmi une pluralité de modes de navigation par interface utilisateur sur un dispositif mobile (100), le dispositif mobile comprenant :
un écran d'affichage tactile (110) ; et
un détecteur (440) servant à détecter l'orientation du dispositif mobile,
le dispositif mobile étant configuré pour fonctionner dans un premier mode de navigation directe et dans un second mode de navigation indirecte,
le procédé comprenant :
lors de la détection (710) d'une première orientation du dispositif mobile, la fourniture (720) du premier mode de navigation directe ; et
lors de la détection (730) d'une seconde orientation du dispositif mobile, la fourniture (740) du second mode de navigation indirecte,
dans lequel le second mode de navigation indirecte permet à l'utilisateur de sélectionner ou d'interagir avec du contenu affiché sur ledit écran d'affichage tactile (110) sans avoir à toucher ledit écran d'affichage tactile (110) à l'emplacement coïncidant avec l'emplacement dudit contenu affiché.

7. Procédé selon la revendication 6, dans lequel, dans le second mode de navigation indirecte, une entrée provenant de l'écran d'affichage tactile est interprétée comme entrée de navigation indirecte.

8. Procédé selon la revendication 6 ou 7, dans lequel le détecteur (440) est un capteur d'orientation.

9. Procédé selon la revendication 8, dans lequel le premier mode de navigation directe est fourni quand l'écran d'affichage tactile est sensiblement dans une orientation paysage.

10. Procédé selon l'une quelconque des revendications 6 à 9, dans lequel la fourniture du second mode de navigation indirecte comprend en outre :
(e) la configuration d'une première zone de l'écran d'affichage tactile pour recevoir une entrée de navigation indirecte ; et
(f) la configuration d'une seconde zone de l'écran d'affichage tactile pour afficher du contenu.

11. Support lisible par ordinateur comprenant des instructions exécutables sur un processeur (102) du dispositif mobile (100) pour mettre en oeuvre le procédé selon l'une quelconque des revendications 6 à 10.
